(19) Europäisches Patentamt / European Patent Office / Office européen des brevets

(11) **EP 2 381 290 A1**

(12) **EUROPEAN PATENT APPLICATION**

(43) Date of publication:
26.10.2011 Bulletin 2011/43

(51) Int Cl.:
*G02B 27/01* (2006.01)     *G02B 6/00* (2006.01)

(21) Application number: 10275047.8

(22) Date of filing: 23.04.2010

| | |
|---|---|
| (84) Designated Contracting States:<br>AT BE BG CH CY CZ DE DK EE ES FI FR GB GR HR HU IE IS IT LI LT LU LV MC MK MT NL NO PL PT RO SE SI SK SM TR<br>Designated Extension States:<br>AL BA ME RS | (71) Applicant: **BAE Systems PLC**<br>**London SW1Y 5AD (GB)**<br><br>(72) Inventor: **The designation of the inventor has not yet been filed** |

(54) **Optical waveguide and display device**

(57)     An optical method of displaying an expanded colour image comprising extracting from input light bearing said coloured image a first spectral portion and a second spectral portion such that together the two portions contain sufficient information for the image to be displayed in substantially its original colours, separately expanding the two spectral portions each in two dimensions and recombining the expanded spectral portions to display the expanded colour image.

# Fig.4a.

EP 2 381 290 A1

## Description

This invention relates to an optical waveguide and a display device. In particular it is relevant to display devices in which image bearing light is injected into a waveguide, is expanded therein e.g. by diffraction gratings, in two orthogonal dimensions to form a visible image and is released from the waveguide.

Such devices which use a single waveguide, for example as shown in US6509529, can be optimised only for one part of the visible spectrum. Usually the middle part of the spectrum is chosen, with the result that the display has a strong greenish hue.

To obtain a full colour display from this type of device it has been necessary to either limit the field of view, or employ three waveguides. Each waveguide is optimised for a different one of the three primary colours red, green and blue. The outputs of the three waveguides are then additionally combined to form an approximately full-colour display. Such a device has the disadvantages of complexity and cost, since three waveguides are required, and the further disadvantage of weight and bulk, which in particularly undesirable in head-mounted or helmet-mounted displays.

Alternatively, a full-colour solution is obtainable using a three-layer stacked volume grating in a single waveguide (US7418170) but such gratings are difficult to manufacture in quantity, and are consequently expensive.

The present invention at least in its preferred embodiments seeks to reduce some or all of the disadvantages of the prior art.

In one aspect the invention provides an optical method of displaying an expanded colour image comprising extracting from input light bearing said coloured image a first spectral portion and a second spectral portion such that together the two portions contain sufficient information for the image to be displayed in substantially its original colours, separately expanding the two spectral portions each in two dimensions and recombining the expanded spectral portions to display the expanded colour image.

In another aspect, the invention provides an optical structure for the transmission of light input thereto bearing a colour image, comprising means for extracting from the input light a first spectral portion and a second spectral portion such that together the two portions contain sufficient information for light outputted by the structure to display the image in substantially its original colours, a first expanding means for expanding the first spectral portion in two dimensions, a second expanding means for expanding the second spectral portion in two dimensions and means for combining the expanded first and second spectral portions to display the colour image.

Thus an effectively full-colour display can be provided across the full field of view of the image whilst using only two expansion devices, which typically may be two waveguides.

The extracting means may be configured to extract as said first spectral portion at least a majority of a first primary colour component of the input light, part of a second primary colour component thereof and a minority of a third primary colour component thereof, and to extract as said second spectral portion a minority of the first primary colour component, part of the second primary colour component and at least the majority of the third primary colour component.

The extracting means may comprise a first diffraction grating or other diffracting means for extracting the first spectral portion, and a second diffraction grating or other diffracting means for extracting the second spectral portion, the first and second diffracting means having periodic diffracting patterns of different pitch.

The first diffracting means may be adapted to reflect the first spectral portion and to transmit the second spectral portion.

The first diffracting means may comprise at least one coating layer on the diffracting pattern, the thickness and composition of the or each layer being such that interferences between reflections of at least the first primary colour component from some of the interfaces between the layers and/or between a said layer and another medium are constructive.

Thus, the said coating layers on the first diffracting means may comprise a layer of silicon dioxide and a layer of titanium dioxide.

The second diffracting means may comprise a reflective layer and at least one coating layer, the thickness and composition of the or each such layer being such that interferences between reflections of at least the third primary colour component from the reflective layer and from at least one interface between the layers or between a said layer and another medium are constructive.

Thus the reflective coating on the second diffracting means may comprise a layer of silver, and the coating layer thereon must by of titanium dioxide.

The two expanding means may be disposed relative to each other so that in operation the expanded first spectral portion passes from the first expanding means through the second expanding means, and the expanded first and second spectral portions are thereby combined as said image.

A said expanding means may be a waveguide comprises a first diffracting means for expanding a said spectral portion in the first dimension and a second diffracting means for expanding the said spectral portion in the second dimension.

The second diffracting means of the second expanding means may be adapted to combine the expanded first and second portions as said image.

The invention also provides a helmet-mounted display, a head-up display or another display system comprising an optical structure or configured to implement a method as set forth above.

The invention now will be described merely by way of example with reference to the accompanying drawings; wherein:

Figure 1 illustrates a problem of a prior art device;

Figure 2 illustrates the principle of the present invention,

Figure 3 shows part of a structure according to the invention,

Figures 4a and 4b show side views of a structure according to the invention, Figure 4b being an enlarged view of part of Figure 4a,

Figure 5 is a further enlarged view of a grating of Figure 4b,

Figure 6 shows the effect of a coating layer in Figure 4b,

Figures 7, 8 and 9 illustrate the operation of the grating of Figure 5,

Figure 10 is a further enlarged view of another grating of Figure 4b,

Figure 11 illustrates the operation of the grating of Figure 10, and

Figure 12 shows the overall transmission efficiency of sub-structure according to the invention, consisting of the elements shown in Figures 5 and 10.

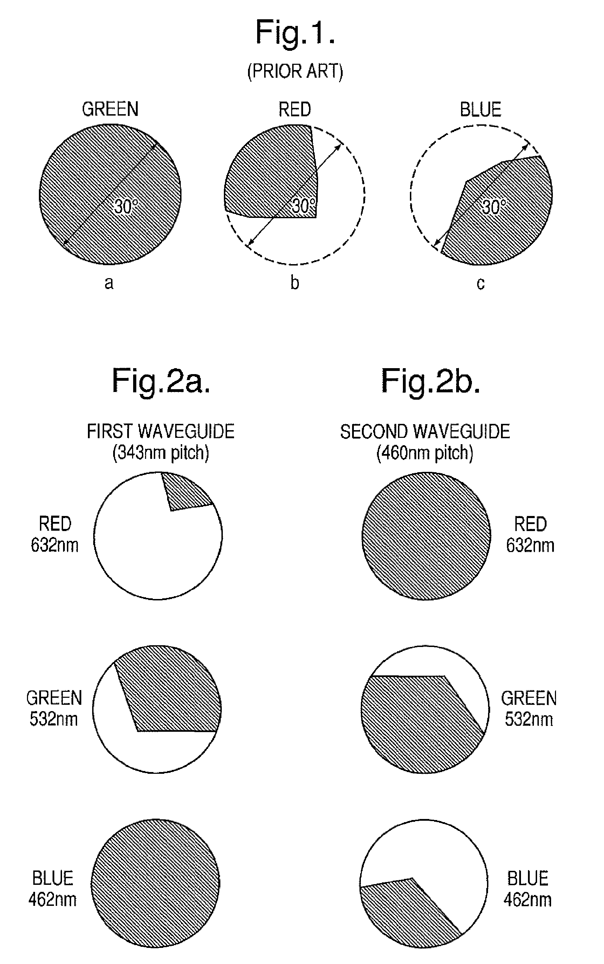

Current single-waveguide displays designs can only be optimised for one part of the full colour spectrum. For example Figure 1 shows the angular output of a waveguide made of a glass having a refractive index of 1.62, and using diffraction gratings having a pitch of 410nm, for an input image having a 30° field of view. It can be seen that for the three primary colours (red, green and blue) the full 30° field of view is obtained only for the green part of the spectrum (Figure 1a). Only a portion of the red image can be displayed by the waveguide (Figure 1b); the remainder of the red rays fail to diffract because they are evanescent. Further, only a portion of the blue image can be displayed (Figure 1c); when the remainder of the blue rays are injected into the waveguide, they are diffracted at too low an angle for total internal reflection within the waveguide, and thus fail to propagate along it.
Thus, conventionally three waveguides are required for a full colour display unless a stacked volume grating is used.
In the preferred embodiment of the invention a three-colour solution is implemented using only single surface gratings in two waveguides, the outputs of which are shown in Figure 2. One waveguide has gratings of 343nm pitch, and displays the majority (and preferably all) of the blue image, at least (and preferably more than) half of the green image and a small part of the red image. The other waveguide has gratings of 460nm pitch, and displays the majority (and preferably all) of the red image, at least (and preferably more than) half of the green image and a small part of the red image. The outputs of the two waveguides are shown respectively in Figures 2a and 2b. The proportion of each colour image displayed by the second waveguide is such that when taken with the proportion of the corresponding colour image displayed by the first waveguide, and properly aligned with it, all of that colour image is displayed; Figure 2 shows the display for a 34° field of view.
The three colour images do not have to be separated; in fact as shown in Figure 2 each waveguide will display some of each primary colour image. The two regions of each primary colour image from the two waveguides do however have to complement each other so that a full image is formed in each colour. To ensure that this is achieved, there may be some overlap between the two parts of the image from the respective waveguides. This overlap can improve the efficiency of the display system, without materially affecting the colour balance.
Factors which must be taken into account to achieve a full image in each primary colour include:

- The correct choice of (unequal) pitches for the input diffraction gratings of the waveguides. The expansion gratings within each waveguide will generally have a pitch equal to the input grating for that particular waveguide.

- The grating profiles, which controls the amount of light diffracted into the required order. Generally, a sawtooth type profile is preferred for input gratings.

- The application of suitable coating layers on the input gratings.

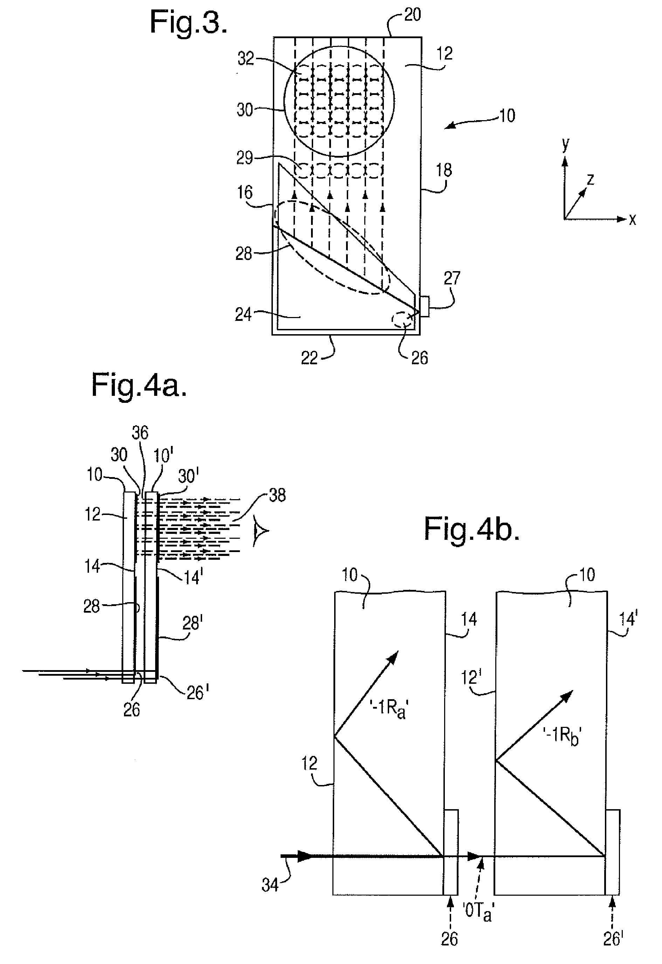

Figure 3 shows part of a structure according to the invention. It is based on the structure shown in Figure 4 of our earlier co-pending applications GB0906266.2 and EP09275024.9, the disclosure of which is incorporated herein by reference.
The structure comprises a slab waveguide 10, i.e. one which has parallel principal faces 12, 14 (Figure 4) and parallel opposite edge surfaces 16, 18 and 20, 22. The waveguide has a grating area 24 in which is provided an input transmission grating 26. Image bearing light is inputted to the input grating 26 generally in the Z-direction (into the plane of the Figure) and, depending on its wavelength either is diffracted to a mirrored region 27 of edge surface 18 and thence to a first pupil expansion grating 28, or is not diffracted. In the latter case it passes through the waveguide and out of the rear surface 16.
A second slab waveguide 10' (Figure 4a) is disposed immediately behind the waveguide 10. Features corresponding to those of the waveguide 10 have the same reference numerals with the addition of a prime ('). As noted with reference to Figure 2, the input grating 26 of the first waveguide 10 is of 343nm pitch, and the input grating 26' of the second waveguide 10' is of 460nm pitch. In the example given here, all the gratings within a given waveguide will have the same pitch.

Referring to Figure 4b, incoming light rays 34 bearing a full colour image enter the waveguide 10 though its front principal surface 12 and are incident on the input grating 26. Some of the rays (those forming the image components shown in Figure 2a) as determined by their wavelengths, the pitch of the grating, and the angle of incidence, are diffracted into the minus one reflected order (labelled -1R$_a$ in Figure 4a) and propagate within the waveguide via the mirrored surface 27 to the first expansion grating 28 and thence to the second expansion grating 30. The output of the first waveguide thus is the expanded spectral portion of the full image shown in Figure 2a. Other rays incident on the grating 26 are not diffracted and pass straight though it as the zero transmission order labelled '0Ta' in Figure 4b.

Some rays may be diffracted into other unwanted orders, and are wasted. In order to minimise this, the grating 26 ideally should be such that any ray not diffracted into the '-1R$_a$' order should stay in the undiffracted '0T$_a$' order. Coatings applied to the profiled surface of the grating 26 can assist towards achievement of this objective as described hereafter.

The transmitted '0Ta' light, which contains the three spectral image portions shown in Figure 2b is incident on the front surface 12' of the second waveguide 10', and thence upon the input grating 26'. This grating has a mirrored (reflective) coating as described hereafter and thus operates wholly as a reflection grating.

The pitch of the grating (460nm) is suitable to diffract the incident light into the '-1R$_b$' reflected order. The reflected light propagates within the waveguide via the mirrored surface 27' to the expansion grating 28' and 30', where it is expanded into the three spectral image portions of Figure 2b.

The two waveguides 10, 10' are accurately positioned relative to each other so that expanded light 36 (Figure 4a) issuing from grating 30 of waveguide 10 is incident on grating 30' of waveguide 10' so as to pass through it and combine with the expanded light issuing from grating 30' to form a single full-colour image 38 as described with reference to Figure 2.

The choice of grating pitches determines how the colours are shared between the two waveguides. The first grating pitch is chosen so that it diffracts most of the blue field of view (FOV) and more than half of the green FOV. The pitch of the grating within the second waveguide is chosen so that it diffracts most of the red FOV and the complementary half of the green FOV. The system is then modelled and the grating pitches are fine-tuned to attain the highest FOV for all three colours.

The diffraction of light into various orders is determined by the grating profile (see for example 'Diffraction Analysis of dielectric surface relief gratings' M G Moharam and T K Gaylord, Journ. Optical Soc. America, Vol 72 Issue 10, pp 1385-1392 (1982)). Application of coatings to their surfaces can further tune the response of the gratings by controlling the phase of the wavefronts diffracted from the interfaces between the coating layers.

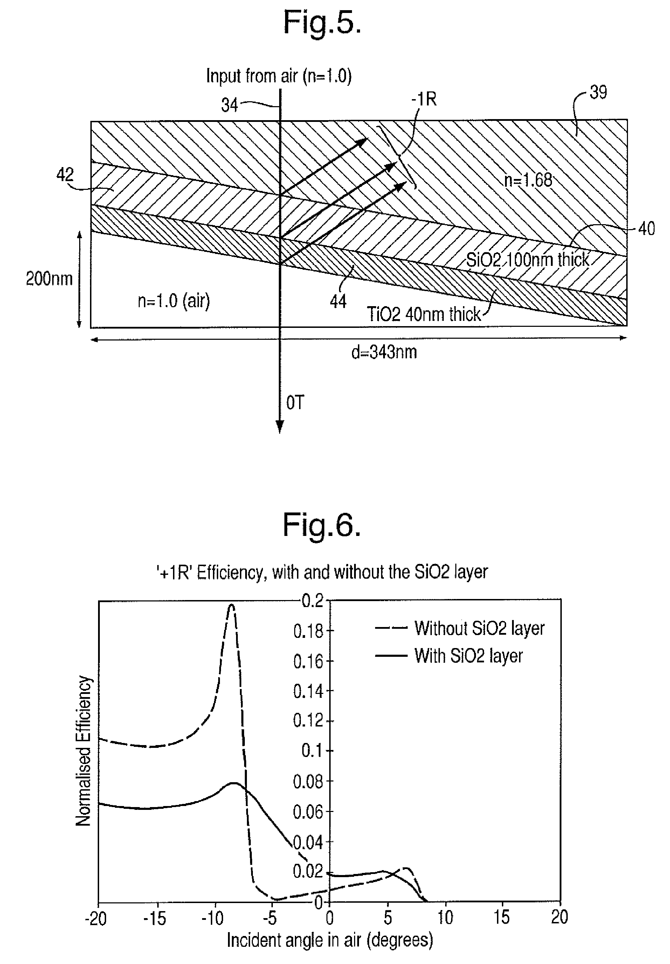

Figure 5 shows one period of the grating 26. It can be seen that the grating has a period (pitch) of 343nm, and is of saw-tooth form with a height of 200nm. This height determines the blaze angle of the grating. The profiled grating surface 40 has a coating layer of silicon dioxide 42 of thickness 100nm, and a further coating layer 44 of titanium dioxide which is 40nm thick.

Input light 34 is incident on the front surface 12 of waveguide 10 (not shown in Figure 5), which is of a glass having a refractive index of 1.81. The light then passes though a polymer layer 39 (n=1.68) on which the grating profile 40 is formed and is reflected in various proportions from the polymer/SiO$_2$, the SiO$_2$/TiO$_2$ and TiO$_2$/air interfaces, depending on the angle of incidence and wavelength of each ray. The coating materials and thicknesses are chosen by modelling such that these multiple reflections interfere constructively and therefore the diffraction efficiency into the '-1R' order will be high. Other rays (in this case mainly those towards the red end of the spectrum) at different wavelength and incidence pass through the grating with very little light being diffracted. The grating thus effectively operates as a band pass filter.

The grating shown in Figure 5 is required to have high diffraction efficiency for the '-1R' order, high transmission efficiency for the '0T' order, and low diffraction efficiency for all other (unwanted) orders. Figure 6 shows the variation of the '+1R' (unwanted) order efficiency with the incident angle of the incoming light 34 on the front face 12 of the waveguide 10. The presence of the intervening parallel-sided glass material of the waveguide through which the light passes before reaching the polymer layer 39 does not affect the effective angle of incidence on the polymer layer which remains the same regardless of the refractive index of the glass. Without the 100nm thick SiO$_2$ layer, the efficiency of this order (dotted line) peaks to approximately 20% at an angle of incidence of 8 degrees. Addition of the SiO$_2$ layer suppresses the '+1R' efficiency, as shown by the solid line in the graph, which is desirable.

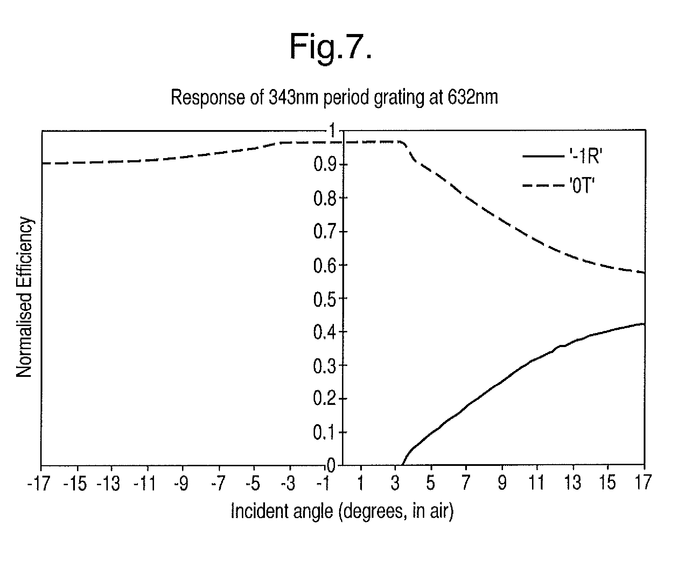

Figure 7 shows the response of the grating 26 to monochromatic red light of wavelength 632nm; the incident angle again is that of the incoming light 34 in air on to the front face 12 of the waveguide 10. It will be noted that for angles of incidence of less than 3.5 degrees, the grating does not diffract the rays into the '-1R' order. Instead, they are transmitted through the grating in the '0Ta' mode at a transmission efficiency of 90% or more.

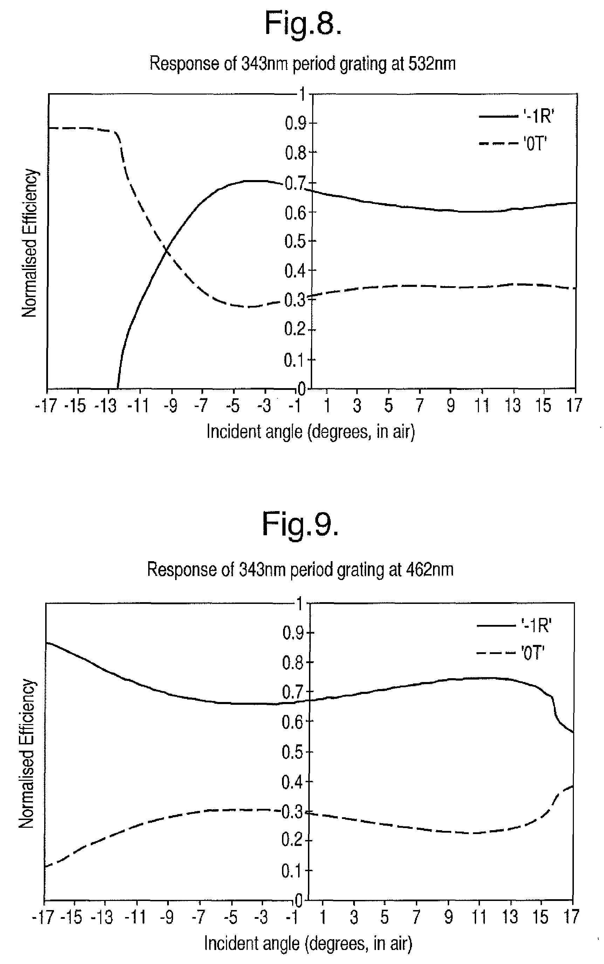

Figure 8 shows the response of the grating 26 to monochromatic green light of wavelength 532nm. For angles of incidence of less than 12.5 degrees the grating does not diffract the rays into the -1R order. Zero order transmission (0Ta) in this region is approximately 90%.

The response of the grating 26 to monochromatic blue light of wavelength 462nm is shown in Figure 9. Across a field of view of 34 degrees (-17 to +17 degrees), the diffraction efficiency into the -1R order is better than 50% and is better than 65% for almost all of the range.

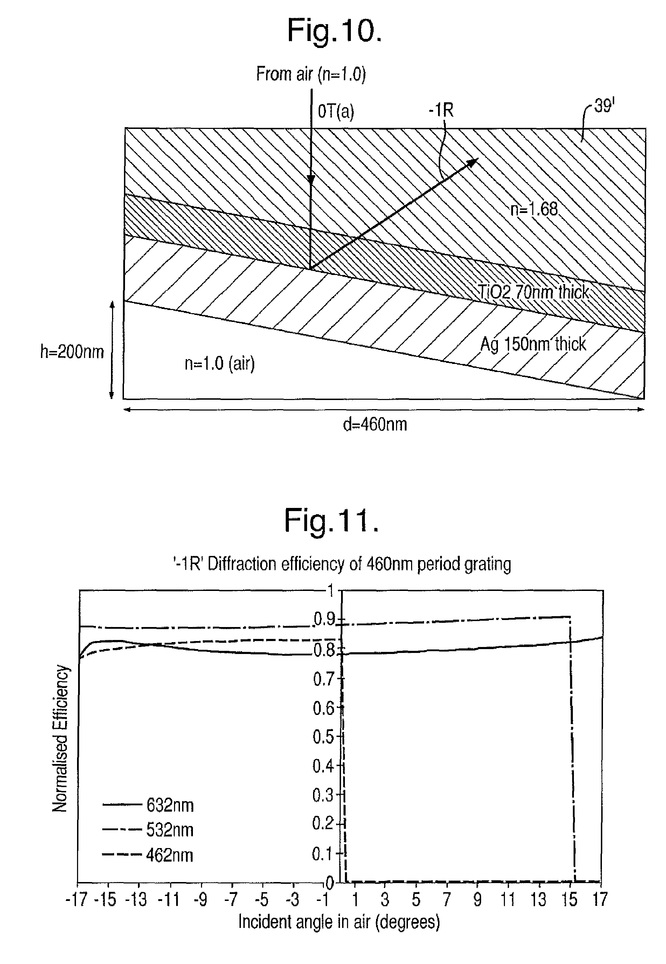

Figure 10 shows the reflective grating 26' of the second waveguide 10'. It is of saw-tooth form, with a period (pitch) of 460nm and a height of 200nm. It is formed on a polymer layer 39' of refractive index 1.68 and has a grating layer 46 of titanium dioxide, 70nm thick, backed by a reflective layer 48 of silver, 150nm thick, from which the incident light is reflected as shown in Figure 10. As disclosed in our co-pending applications GB0906266.2 and EP09275024.9, addition of the TiO$_2$ layer between the polymer and the silver layer yields, through the phenomenon of phase matching, high diffraction efficiency and high angular bandwidth in the '-1R' order.

From Figure 11 it can be seen that

- For red light (632nm) the grating 26' diffracts light into the -1R order with an efficiency of ~80% over all angles of incidence on face 12' of waveguide 10'.

- For green light (532nm) the grating 26' does not diffract incident rays at angles of higher than 15 degrees. These rays fail to propagate within the waveguide 10'.

- For blue light (462nm) the grating 26' does not diffract incident rays at angles of higher than zero degrees. Hence these rays fail to propagate in the waveguide 10'.

- Outside these incident angle ranges, both blue and green are diffracted into the -1R order with high efficiency.

Considering now the efficiency of the input gratings 26, 26' of the two waveguides 10, 10' in diffracting image-bearing light, for any incident ray of a given incident angle and wavelength, the system efficiency (M) as a fraction of the input light intensity is

$$M = \text{'-1R}_a\text{'} + (\text{'0T}_a\text{'} \times \text{'-1R}_b\text{'}).$$

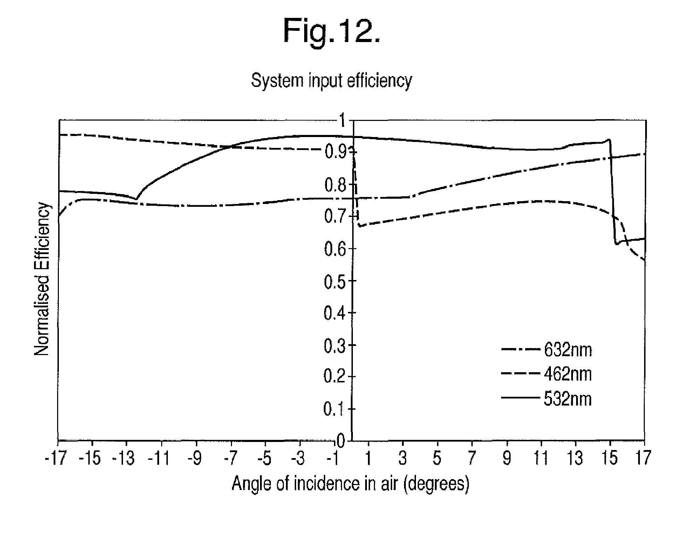

This relationship is shown in Figure 12. It can be seen that at 632nm, because grating 26' diffracts across the whole field of view, the overall efficiency is greater than 70%, rising for positive angles of incidence due to the constitution from grating 26. At 532nm, the efficiency of grating 26' is uniformly high except at angles of incidence ($i$) above 15 degrees. However this is compensated by the 60% efficiency of grating 26' at those angles. Thus, although there is a sharp reduction in system efficiency from 90% at $i$ >15 degrees, nevertheless the overall efficiency remains adequate at 60%.

At 462nm, grating 26 has adequate efficiency across the whole field of view (upwards of 60% except for $i$ > 15 degrees), and hence the inability of the grating 26' to diffract at $i$ > 0 degrees can be tolerated.

The invention also includes any novel feature or combination of features herein disclosed whether or not specifically claimed.

**Claims**

1. An optical structure for the transmission of light input thereto bearing a colour image, comprising means for extracting from the input light a first spectral portion and a second spectral portion such that together the two portions contain sufficient information for light outputted by the structure to display the image in substantially its original colours, a first expanding means for expanding the first spectral portion in two dimensions, a second expanding means for expanding the second spectral portion in two dimensions and means for combining the expanded first and second spectral portions to display the colour image.

2. The structure of claim 1 wherein the extracting means is configured to extract as said first spectral portion at least a majority of a first primary colour component of the input light, part of a second primary colour component thereof and a minority of a third primary colour component thereof, and to extract as said second spectral portion a minority of the first primary colour component, part of the second primary colour component and at least the majority of the third primary colour component.

3. The structure of claim 1 or 2 wherein the extracting means comprises a first diffraction grating or other diffracting means for extracting the first spectral portion, and a second diffraction grating or other diffracting means for extracting the second spectral portion, the first and second diffracting means having periodic diffracting patterns of different pitch.

4. The structure of claims 2 and 3 wherein the first diffracting means is adapted to reflect the first spectral portion and to transmit the second spectral portion.

5. The structure of claim 4 wherein the first diffracting means comprises at least one coating layer on the diffracting pattern, the thickness and composition of the or each layer being such that interferences between reflections of at least the first primary colour component from some of the interfaces between the layers and/or between a said layer and another medium are constructive.

6. The structure of claim 4 or 5 wherein the said coating layers on the first diffracting means comprise a layer of silicon dioxide and a layer of titanium dioxide.

7. The structure of any of claims 3 to 6 wherein the second diffracting means comprises a reflective layer and at least one coating layer, the thickness and composition of the or each such layer being such that interferences between reflections of at least the third primary colour component from the reflective layer and from at least one interface between the layers or between a said layer and another medium are constructive.

8. The structure of claim 7 wherein the reflective coating on the second diffracting means comprises a layer of silver and the coating layer thereon is of titanium dioxide.

9. The structure of any preceding claim wherein the two expanding means are disposed relative to each other so that in operation the expanded first spectral portion passes from the first expanding means through the second expanding means, and the expanded first and second spectral portions are thereby combined as said image.

10. The structure of any preceding claim wherein a said expanding means comprises a waveguide having a first diffracting means for expanding a said spectral portion in the first dimension and a second diffracting means for expanding the said spectral portion in the second dimension.

11. The structure of claim 9 or 10 wherein the second diffracting means of the second expanding means is adapted to combine the expanded first and second portions as said image.

12. An optical method of displaying an expanded colour image comprising extracting from input light bearing said coloured image a first spectral portion and a second spectral portion such that together the two portions contain sufficient information for the image to be displayed in substantially its original colours, separately expanding the two spectral portions each in two dimensions and recombining the expanded spectral portions to display the expanded colour image.

13. The method of claim 12 comprising extracting as said first spectral portion at least a majority of a first primary colour component of the input light, part of a second primary colour component thereof and a minority of a third primary colour component thereof, and extracting as said second spectral portion a minority of the first primary colour component, part of the second primary colour component and at least the majority of the third primary colour component

14. A display system comprising the structure or configured to implement the method of any preceding claim.

15. The system of claim 14, being a helmet-mounted or head-mounted display system, or a head-up display system.

# Fig.1.
### (PRIOR ART)

GREEN

RED

BLUE

30°

30°

30°

a

b

c

# Fig.2a.

# Fig.2b.

FIRST WAVEGUIDE
(343nm pitch)

SECOND WAVEGUIDE
(460nm pitch)

RED
632nm

RED
632nm

GREEN
532nm

GREEN
532nm

BLUE
462nm

BLUE
462nm

Fig.3.

Fig.4a.

Fig.4b.

# Fig.5.

Input from air (n=1.0)

200nm

d=343nm

n=1.0 (air)

n=1.68

SiO2 100nm thick

TiO2 40nm thick

0T

# Fig.6.

'+1R' Efficiency, with and without the SiO2 layer

- - - Without SiO2 layer
—— With SiO2 layer

Normalised Efficiency

Incident angle in air (degrees)

# Fig.7.

Response of 343nm period grating at 632nm

# Fig.8.

Response of 343nm period grating at 532nm

# Fig.9.

Response of 343nm period grating at 462nm

# Fig.10.

From air (n=1.0)

0T(a)    -1R    39'

n=1.68

TiO2 70nm thick

Ag 150nm thick

h=200nm    n=1.0 (air)

d=460nm

# Fig.11.

'-1R' Diffraction efficiency of 460nm period grating

Normalised Efficiency

——— 632nm
—·—· 532nm
— — 462nm

Incident angle in air (degrees)

# Fig.12.

## System input efficiency

Europäisches
Patentamt

European
Patent Office

Office européen
des brevets

**EUROPEAN SEARCH REPORT**

Application Number

EP 10 27 5047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/221448 A1 (NIVON UZIA [IL] ET AL) 5 October 2006 (2006-10-05) | 1-4,9-15 | INV. G02B27/01 G02B6/00 |
| Y | * paragraphs [0002], [0 18], [0 19], [0 22], [0 26], [0 27], [0 35], [0 74], [0 76], [0 78], [0 81] - [0089] * * figures 2, 3a, 3b, 3c, 4 * | 5-8 | |
| Y | US 2005/001975 A1 (ISHIHARA JUN [JP] ET AL ISHIHARA JUN [JP] ET AL) 6 January 2005 (2005-01-06) * paragraphs [0186], [ 192] * * figures 34-37 * | 5-8 | |
| A | WO 2007/141587 A1 (NOKIA CORP [FI]; NOKIA INC [US]; LEVOLA TAPANI [FI]) 13 December 2007 (2007-12-13) * the whole document * | 1-15 | |

TECHNICAL FIELDS
SEARCHED      (IPC)

G02B

The present search report has been drawn up for all claims

| Place of search | Date of completion of the search | Examiner |
|---|---|---|
| Munich | 23 September 2010 | Denise, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 27 5047

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2010

| Patent document cited in search report | Publication date | Patent family member(s) | | Publication date |
|---|---|---|---|---|
| US 2006221448 A1 | 05-10-2006 | EP | 1866684 A1 | 19-12-2007 |
| | | WO | 2006106501 A1 | 12-10-2006 |
| | | JP | 2008535032 T | 28-08-2008 |
| | | KR | 20070119017 A | 18-12-2007 |
| US 2005001975 A1 | 06-01-2005 | US | 2005168679 A1 | 04-08-2005 |
| WO 2007141587 A1 | 13-12-2007 | CN | 101460882 A | 17-06-2009 |
| | | EP | 2035881 A1 | 18-03-2009 |
| | | JP | 2009539128 T | 12-11-2009 |
| | | US | 2010165465 A1 | 01-07-2010 |

EPO FORM P0459

For more details about this annex : see Official Journal of the European Patent Office, No. 12/82

**EP 2 381 290 A1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6509529 B
- US 7418170 B
- GB 0906266 A
- EP 09275024 A

**Non-patent literature cited in the description**

- **M G MOHARAM ; T K GAYLORD.** Diffraction Analysis of dielectric surface relief gratings. *Journ. Optical Soc. America,* 1982, vol. 72 (10), 1385-1392